# EUROPÄISCHE PATENTANMELDUNG

(11) **EP 0 894 811 A1**
(43) Veröffentlichungstag der Anmeldung: **03.02.1999**
(21) Anmeldenummer: 98114350.6
(22) Anmeldetag: 30.07.1998
(51) Int. Cl.: C08F 222/00, C08F 216/14, C04B 24/26, C08F 222/20

(54) **Copolymere auf Basis von ungesättigten Dicarbonsäure-Derivaten und Oxyalkylen-glykol-Alkenylethern**

(30) Priorität: 01.08.1997 DE 19733429
(71) Anmelder: SKW Trostberg Aktiengesellschaft, 83308 Trostberg (DE)
(72) Erfinder: Albrecht, Gerhard, Dr., 83342 Tacherting (DE); Leitner, Hubert, 8967 Haus/Ennstal (AT); Weichmann, Josef, Dr., 84568 Pleiskirchen (DE); Kern, Alfred, Dr., 84558 Kirchweidach (DE)
(74) Vertreter: Weiss, Wolfgang, Dipl.-Chem. Dr.

(57) **Zusammenfassung**

Es werden Copolymere auf Basis von ungesättigten Dicarbonsäure-Derivaten, Oxyalkylenglykol-Alkenylethern, ungesättigten Dicarbonsäureimiden und/oder -amiden sowie vinylischen Monomeren beschrieben und deren Verwendung als Zusatzmittel für hydraulische Bindemittel, insbesondere Zement. Die Copolymere zeigen auch in Betonmischungen mit extrem niedrigen Wasseranteilen eine hervorragende verflüssigende Wirkung und verzögern auch bei hoher Dosierung den Erhärtungsprozeß nicht.

## Beschreibung

Die vorliegende Erfindung betrifft Copolymere auf Basis von ungesättigten Dicarbonsäure-Derivaten und Oxyalkylenglykol-Alkenylethern, Verfahren zu deren Herstellung sowie die Verwendung dieser Copolymere als Zusatzmittel für hydraulische Bindemittel, insbesondere Zement, zur Verbesserung der Eigenschaften daraus hergestellter Baustoffe im Verarbeitungsprozeß und im erhärteten Zustand.

Es ist bekannt, daß man wäßrigen Aufschlämmungen von pulverförmigen anorganischen oderorganischen Substanzen, wie Tonen, Porzellanschlicker, Silikatmehl, Kreide, Ruß, Gesteinsmehl, Pigmenten, Talkum, Kunststoffpulvern und hydraulischen Bindemitteln zur Verbesserung ihrer Verarbeitbakeit, d.h. Knetbarkeit, Streichfähigkeit, Spritzbarkeit, Pumpbarkeit oder Fließfähigkeit, oft Zusatzmittel in Form von Dispergiermitteln zusetzt. Diese in der Regel ionische Gruppen enthaltenden Zusatzmittel sind in der Lage, Feststoffagglomerate aufzubrechen, die gebildeten Teilchen zu dispergieren und auf diese Weise die Verarbeitbarkeit speziell von hochkonzentrierten Suspensionen zu verbessern. Dieser Effekt wird gezielt auch bei der Herstellung von Baustoffmischungen, die hydraulische Bindemittel wie Zement, Kalk, Gips oder Anhydrit enthalten, ausgenutzt.

Um diese Baustoffmischungen auf der Basis der genannten Bindemittel in eine gebrauchsfertige, verarbeitbare Form zu überführen, ist in der Regel wesentlich mehr Anmachwasser erforderlich, als für den nachfolgenden Hydratations- bzw. Erhärtungsprozeß notwendig wäre. Der durch das überschüssige, später verdunstende Wasser gebildete Hohlraumanteil im Baukörper führt zu signifikant verschlechterten mechanischen Festigkeiten und Beständigkeiten.

Um diesen überschüssigen Wasseranteil bei einer vorgegebenen Verarbeitungskonsistenz zu reduzieren oder/und die Verarbeitbarkeit bei einem vorgegebenen Wasser/Bindemittel-Verhältnis zu verbessern, werden Zusatzmittel eingesetzt, die im allgemeinen als Wasserreduktions- oder Fließmittel bezeichnet werden. Als derartige Mittel sind vor allem Polykondensationsprodukte auf Basis von Naphthalin- oder Alkylnaphthalinsulfonsäuren (vgl. EP-A 214 412) bzw. Sulfonsäuregruppen enthaltende Melamin-Formaldehydharze (vgl. DE-PS 16 71 017) bekannt.

Nachteilig bei diesen Zusatzmitteln ist die Tatsache, daß ihre ausgezeichnete verflüssigende Wirkung insbesondere im Betonbau nur über eine kurze Zeitspanne bestehen bleibt. Der Abfall der Verarbeitbarkeit von Betonmischungen ("Slump-loss") in kurzer Zeit kann insbesondere dort zu Problemen führen, wo zwischen Herstellung und Einbau des Frischbetons, beispielsweise durch lange Förder- und Transportwege, ein großer Zeitraum liegt.

Ein zusätzliches Problem ergibt sich bei der Anwendung derartiger Fließmittel im Bergbau und im Innenbereich (Gipskartonplattentrocknung, Anhydritfließestrich-Anwendungen, Betonfertigteilherstellung), wo es zur Freisetzung des in den Produkten herstellungsbedingt enthaltenden toxischen Formaldehyds und damit zu beträchtlichen arbeitshygienischen Belastungen kommen kann. Aus diesem Grund wurde auch schon versucht, statt dessen formaldehydfreie Betonfließmittel aus Maleinsäuremonoestern und Styrol, beispielsweise entsprechend der EP-A 306 449, zu entwickeln. Die Fließwirkung von Betonmischungen kann mit Hilfe dieser Zusatzmittel über einen ausreichend langen Zeiraum aufrecht erhalten werden, jedoch geht die ursprünglich vorhandene, sehr hohe Dispergierwirkung nach Lagerung der wäßrigen Zubereitung des Fließmittels, bedingt durch die Hydrolyse des polymeren Esters, sehr schnell verloren.

Dieses Probelm tritt bei polymeren Fließmitteln betehend aus Copolymeren mit Maleinsäuremonoester-, Maleinsäureamid- bzw. -imid-Strukturen sowie Vinylmonomeren gemäß der EP-A 610 699 nicht auf. Jedoch weisen diese Produkte den Nachteil auf, daß sie unerwünscht hohe Anteile von Luftporen einführen, woraus eine reduzierte Festigkeit und Beständigkeit des erhärteten Baustoffs resultiert. Um die für die vorgesehene Verwendung der Copolymere erforderliche optimale Kettenlänge einzustellen, ist außerdem der Einsatz von Molekulargewichtsreglern wie n- und tert.-Dodecylmercaptan bzw. Diisopropylxanthogendisulfit unverzichtbar. Die Verwendung dieser Verbindungen bei der Herstellung der oben genannten Fließmittel ist jedoch mit sehr starken Geruchsbelästigungen verbunden.

Das Problem der Einführung unerwünscht hoher Anteile an Luftporen wird bei den in der EP-A 736 553 beschriebenen Copolymeren auf Basis von Oxyalkylenglykol-Alkenylethernundungesättigten Dicarbonsäure-Derivaten durch hydrophobe Strukturelemente basierend auf Polydimethylsiloxan, Polypropylenglykol-haltigen (Block-)Polymeren oder/und Dicarbonsäureestern behoben. Darüber hinaus ist der Einsatz geruchsbelästigender Molekulargewichtsregler zur Herstellung der Produkte nicht erforderlich. Jedoch weisen derartige Copolymere, ebenso wie die in der EP-A 610 699 beschriebenen, insbesondere dort nicht die optimalen Eigenschaften auf, wo mit geringstmöglichem Wasseranteil ein besonders dicht gefügter und daher hochfester und hochbeständiger Beton erzeugt werden soll, nämlich in dem zukunftsträchtigen und innovativen Feld des Hochleistungsbetonbaus.

Der vorliegenden Erfindung lag daher die Aufgabe zugrunde, neue Polymerverbindungen bereitzustellen, welche die genannten Nachteile entsprechend dem Stand der Technik nicht aufweisen, sondern in möglichst geringer Dosierung die Verarbeitbarkeit von hochkonzentrierten Baustoffmischungen praxisgerecht lange aufrechterhalten, ohne den Erhärtungsprozeß zu verzögern und ohne ein Übermaß an Luftporen einzuführen, wobei gleichzeitig auf den Einsatz geruchsbelästigender Stoffe beim Herstellverfahren verzichtet werden kann.

Diese Aufgabe wurde durch Copolymere gemäß Anspruch 1 gelöst. Es hat sich nämlich überraschenderweise gezeigt, daß die erfindungsgemäßen Produkte auf der Basis von ungesättigten Dicarbonsäure-Derivaten und Oxyalkylenglykol-Alkenylethern wäßrigen Baustoffmischungen ausgezeichnete Verarbeitungseigenschaften verleihen, ohne die Eigenschaften des Baustoffs im erhärteten Zustand negativ zu beeinflussen.

Besonders überraschend war die Tasache, daß die erfindungsgemäßen Copolymere auch in Betonmischungen mit extrem niedrigen Wasseranteilen eine hervorragende verflüssigende Wirkung zeigen und auch bei hoher Dosierung den Erhärtungsprozeß nicht verzögern.

Die Copolymere entsprechend der vorliegenden Erfindung bestehen aus mindestens vier Baugruppen a), b), c) und d).

Die erste Baugruppe a) stellt ein Dicarbonsäure-Derivat entsprechend der Formel Ia und/oder Ib dar: 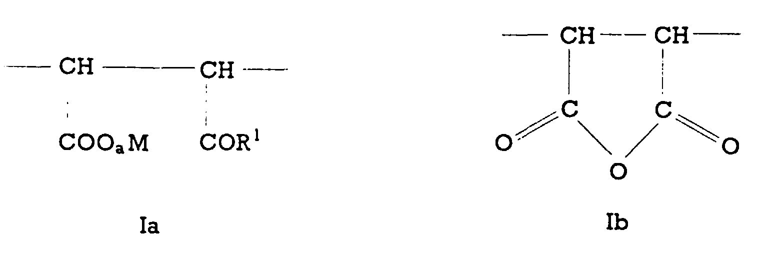 mit folgender Bedeutung für a, M und R¹:
- M: bedeutet jeweils unabhängig Wasserstoff, ein ein- oder zweiwertiges Metallkation, Ammoniumion oder einen organischer Aminrest, wobei als organische Aminreste vorzugsweise substituierte Ammonium-Gruppen eingesetzt werden, die sich ableiten von primären, sekundären oder tertiären C₁ bis C₂₀-Alkylaminen, C₁ bis C₂₀-Alkanolaminen, C₅ bis C₈-Cycloalkylaminen und C₅ bis C₁₄-Arylaminen. Beispiele für die entsprechenden Amine sind Methylamin, Dimethylamin, Trimethylamin, Ethanolamin, Diethanolamin, Triethanolamin, Methyldiethanolamin, Cyclohexylamin, Dicyclohexylamin, Phenylamin, Diphenylamin in der protonierten (Ammonium)Form.
- a: = 1/2 oder 1, je nachdem, ob es sich bei M und ein ein- oder zweiwertiges Kation handelt.
- R¹: kann ebenfalls OₐM, vorzugsweise aber -O-(CₘH₂ₘO)ₙ-R² bedeuten, wobei R² H, ein aliphatischer Kohlenwasserstoffrest mit 1 bis 20 C-Atomen, ein cycloaliphatischer Kohlenwasserstoffrest mit 5 bis 8 C-Atomen oder ein gegebenenfalls substituierter Arylrest mit 6 bis 14 C-Atomen und m 2 bis 4 sowie n 1 bis 200 sein kann. Die aliphatischen Kohlenwasserstoffe können hierbei linear oder verzweigt sowie gesättigt oder ungesättigt sein. Bevorzugte Cycloalkylreste sind Cyclopentyl- oder Cyclohexylreste, bevorzugte Arylreste sind Phenyl- oder Naphthylreste, die beispielsweise durch C₁-C₄-Alkylreste und insbesondere durch Hydroxyl-, Carboxyl- und/oder Sulfonsäuregruppen substituiert sein können.

Anstelle des oder neben dem Dicarbonsäure-Derivat gemäß Formel Ia kann die Baugruppe a) (Dicarbonsäure-Derivat) auch in cyclischer Form entsprechend Formel Ib vorliegen.

Die zweite Baugruppe b) entspricht der Formel II: 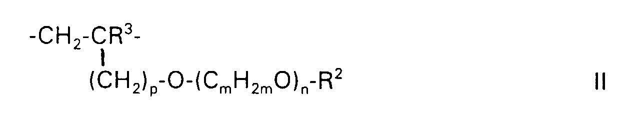 und leitet sich von Oxyalkylenglykol-Alkenylethern ab, in der m, n und R² die oben bezeichneten Bedeutungen besitzen. R³ bedeutet wiederum Wasserstoff oder einen aliphatischen Kohlenwasserstoffrest mit 1 bis 5 C-Atomen, der ebenfalls linear oder verzweigt bzw. auch ungesättigt sein kann. p kann Werte zwischen 0 und 3 annehmen.

Gemäß den bevorzugten Ausführungsformen bedeuten in den Formeln Ia und II m 2 oder/und 3, so daß es sich um Polyalkylenoxid-Gruppen handelt, die sich von Polyethylenoxid oder/und Polypropylenoxid ableiten. In einer weitern bevorzugten Ausführungsfom bedeutet p in Formel II 0 oder 1, d.h. es handelt sich um Vinyl- oder/und Allylpolyalkoxylate.

Die dritte Baugruppe entspricht der Formel IIIa oder/und IIIb: 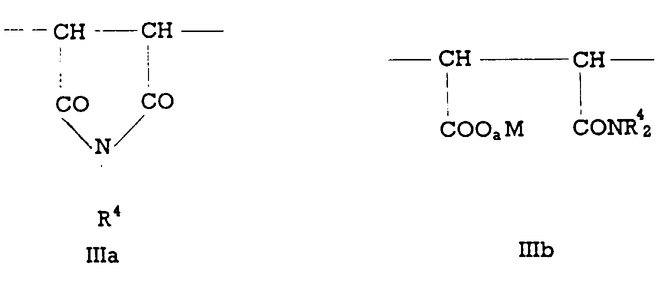 wobei a und M die obigen Bedeutungen haben und R⁴ jeweils unabhängig Wasserstoff, ein aliphatischer gegebenenfalls mit Hydroxyl-Gruppen substituierter Kohlenwasserstoffrest mit 1 bis 20 Kohlenstoffatomen, ein cycloaliphatischer Kohlenwasserstoffrest mit 5 bis 8 C-Atomen oder ein Arylrest mit 6 bis 14 C-Atomen ist, in welchem ein oder mehrere H-Atome beispielsweise durch die Strukturelemente -COOₐM₁, -(SO₃)ₐM oder/und -(PO₃)ₐM₂ substituiert sein können, wobei a und M die obengenannten Bedeutungen besitzen. Außerdem kann R⁴ für die Reste -(CₘH₂ₘO)ₙ-R² und - CO-NH-R² stehen mit den oben genannten Bedeutungen für m, n und R².

Die vierte Baugruppe d) entspricht der Formel IV 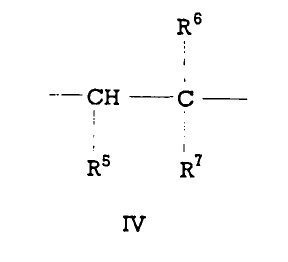 wobei R⁵ jeweils unabhängig Wasserstoff oder eine Methyl- oder Methylengruppe ist, die gegebenenfalls substituiert sein kann und unter Einbeziehung von R⁷ einen oder mehrere 5- bis 8-gliedrige Ringe (beispielsweise einen Indenring) bildet, R⁶ Wasserstoff oder eine Methyl- oder Ethylgruppe ist und R⁷ jeweils unabhängig Wasserstoff, ein C₁ bis C₂₀-Alkyl-, ein C₅ bis C₈-Cycloalkyl- oder C₆ bis C₁₄-Arylrest ist, der gegebenenfalls substituiert sein kann. Daneben kann R⁷ für die Gruppen -O-COR⁴, -OR⁴, -COOR⁴ mit der oben angegebenen Bedeutung für R⁴ stehen.

Es ist als erfindungswesentlich anzusehen, daß die Copolymere 1,0 bis 90 Mol-% Baugruppen der Formel Ia oder/und Ib 0,5 bis 80 Mol-% Baugruppen der Formel II, 0,5 bis 80 Mol-% Baugruppen der Formel IIIa oder/und IIIb sowie 1,0 bis 90 Mol-% Baugruppen der Formel IV enthalten.

Vorzugsweise bestehen diese Copolymere aus 30 bis 60 Mol-% Baugruppen der Formel Ia oder/und Ib, 10 bis 40 Mol-% Baugruppen der Formel II, 3 bis 30 Mol-% Baugruppen der Formel IIIa oder/und IIIb sowie 10 bis 60 Mol-% Baugruppen der Formel IV. Ein besonders bevorzugtes molares Verhältnis der Struktureinheiten (I+III) : (II+IV) liegt bei den erfindungsgemäßen Copolymeren bei ungefähr 1 : 1.

Gemäß einer bevorzugten Ausführungsform enthalten die erfindungsgemäßen Copolymere zusätzlich noch bis zu 50 Mol-%, insbesondere bis zu 20 Mol-%, bezogen auf die Summe der Baugruppen I bis IV, Baugruppen auf der Basis von N-Vinylverbindungen, Vinyl- oder Allylsulfonsäuren sowie gegebenenfalls substituierte Acryl- bzw. Methacrylamide.

Die Strukturelemente I bis IV können jeweils einheitliche Zusammensetzungen darstellen, sie können aber auch als Gemisch verschiedener Substanzen vorliegen. So kann z.B. n im Substituenten R¹ der Formel Ia sowie in der Formel II verschiedene Werte in ein und demselben Copolymer annehmen, was in einer besonders bevorzugten Ausführungsform dazu führt, daß sich lange und kurze Alkylenoxid-Sequenzen abwechseln, was besonders positive Eigenschaften auf die anwendungstechnischen Eigenschaften der erfindungsgemäßen Copolymere haben kann.

Die Anzahl der sich wiederholenden Strukturelemente a) bis d) in den erfindungsgemäßen Copolymeren ist nicht eingeschränkt, doch hat es sich als vorteilhaft erwiesen, diese Anzahl so einzustellen, daß die Copolymere ein mittleres Molekulargewicht von 1 000 bis 200 000 aufweisen, wobei sich die gewünschte Kettenlänge in erster Linie nach der Art des anorganischen Bindemittels (Portlandzement, Anhydrit, Gips usw.) und dem Anwendungsgebiet (Fließbeton, Anhydritestrich etc.) richtet.

Die Herstellung der erfindungsgemäßen Copolymere kann auf verschiedenen Wegen erfolgen. Wesentlich ist hierbei, daß man 1 bis 90 Mol-% eines ungesättigten Dicarbonsäure-Derivats, 0,5 bis 80 Mol-% eines Oxyalkylenglykol-Alkenylethers, 0,5 bis 80 Mol-% eines ungesättigten Dicarbonsäureimids oder -amids und 1,9 bis 90 Mol-% eines vinylischen Monomers vorzugsweise mit Hilfe eines radikalischen Starters polymerisiert.

So ist es möglich, die die Baugruppen Ia, IIIa und IIIb bildenden Monomere in vorgebildeter Form einzusetzen oder aber die genannten Strukturelemente während oder/und nach der Polymerisation durch polymeranaloge Umsetzungen aus der Vorstufe Ib zu bilden. Demgegenüber werden die Baugruppen II und IV in der Regel aus den entsprechenden vorgebildeten Monomeren im Prozeß der Polymerisation erzeugt.

Als ungesättigtes Dicarbonsäure-Derivat, welches zu Baugruppen der Formel Ia führt, werden vorzugsweise Maleinsäure, Fumarsäure, ein- oder zweiwertige Metallsalze dieser Dicarbonsäuren, wie das Natrium-, Kalium-, Calcium- oder Magnesiumsalz, Ammoniumsalze oder Salze mit einem organischen Aminrest eingesetzt. Als vorzugsweise verwendete Monomere, welche die Einheit Ia bilden, werden Polyalkylenglykolmonoester der oben genannten Säuren verwendet, welche die allgemeine Formel V

MₐOOC-CH = CH-COO-(CₘH₂ₘO)ₙ-R² V

aufweisen, mit den bereits angegebenen Bedeutungen für a, m, n und R². Die Struktureinheit Ib leitet sich von Maleinsäureanhydrid ab. Die ungesättigten Dicarbonsäure-Derivate, welche zu den Baugruppen der Formel Ia bzw. Ib führen, werden vorzugsweise in einer Menge von 30 bis 60 Mol-% eingesetzt.

Die zweite erfindungswesentliche Komponente zur Einführung der Baugruppe b) in die erfindungsgemäßen Copolymere stellt ein Oxyalkylenglykol-Alkenylether dar, der vorzugsweise in einer Menge von 10 bis 40 Mol-% eingesetzt wird. Bei den bevorzugten Oxyalkylenglykol-Alkenylethern entsprechend der Formel VI

CH₂ = CR³-(CH₂)ₚ-O-(CₘH₂ₘO)ₙ-R² VI

weisen p, m, n, R² und R³ die oben genannten Bedeutungen auf. Als besonders vorteilhaft hat sich hierbei die Verwendung von Methylpolyethylenglykolmonovinyl- und -allylethern zur Steuerung der Kettenlänge erwiesen (p=0 bzw. 1, m = 2).

Als dritte erfindungswesentliche Komponente zur Einführung der Baugruppe c) werden vorzugsweise 3 bis 30 Mol-% eines ungesättigten Dicarbonsäureimids oder/und -amids eingesetzt. Die Struktureinheit III kann erfindungsgemäß hierbei sowohl als 5-gliedriges, vorzugsweise substituiertes, cyclisches Imid (IIIa), aber auch als offenkettiges Dicarbonsäuremonoamid eines primären oder/und sekundären Amins (IIIb) vorliegen. Diese Struktur kann bereits durch die Natur der entsprechenden Monomere entsprechend VII vorgegeben sein: 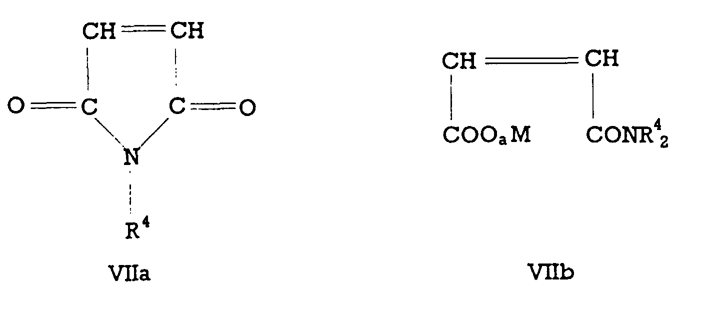 mit den oben angegebenen Bedeutungen für a, M und R⁴.

Beispiele für derartige Monomere sind N-Phenylmaleinimid, N-(2,6-Dimethylphenyl)-maleinimid,N-Hydroxyethylmaleinimid,N-(4-Sulfophenyl)-maleinimid (VIIa), N-Phenylmaleinsäuremonoamid, N-(4-Sulfophenyl)maleinsäuremonoamid, N-(3,6-Disulfonaphthyl-1)-maleinsäuremonoamid und N,N-(Dimethoxyethyl)-maleinsäuremonoamid (VIIb).

Die Struktur entsprechend IIIa oder/und IIIb bzw. VIIa oder/und VIIb kann jedoch auch erst im Verlauf des Polymerisationsprozesses gebildet werden, z.B. durch Umsetzung von primäre Aminogruppen tragenden Verbindungen mit einer Anhydrid-Gruppe gemäß Ib, wobei Verbindungen der Struktur IIIa bzw. VIIa entstehen. Werden sekundäre Amine in diesem "in situ"-Prozeß eingesetzt, so bleibt die Reaktion auf der Stufe des Monoamids gemäß Struktur IIIb bzw. VIIb stehen, was in vielen Fällen sogar erwünscht ist. Beispiele für derartige primäre und sekundäre Amine sind: n-Butylamin, 2-Ethylhexylamin, n-Laurylamin, Glutaminsäure, Glycin, Sulfanilsäure, Taurin, Phosphanilsäure, 1-Amino-3,6-naphthalindisulfonsäure, Cyclohexylamin, Dibutylamin, Bis-(2-methoxyethyl)-amin u.a.

Bei der vierten wesentlichen Komponente zur Einführung der Baugruppe d) handelt es sich vorzugsweise um solche Monomere, die eine hohe Tendenz zur Copolymerisation mit elektronenarmen Acceptormonomeren wie Maleinsäureanhydrid haben. Beispiele für solche Monomere sind Ethylen, Propylen, n-Butylen, Isobuten, Diisobuten, Cyclohexen, Styrol, α-Methylstyrol, Inden, 4-Methoxy-styrol, 4-Methylstyrol, Vinylacetat, Vinylpropionat, Methylvinylether, Ethylvinylether, Dicyclopentadien u.a.

Daneben können auch Methylmethacrylat, Ethylacrylat, Hydroxyethylmethacrylat, Butylacrylat, Acrylsäure, Methacrylsäure u.a. Monomere der allgemeinen Formel VIII verwendet werden:

R⁵CH=CR⁶R⁷ VIII

wobei R⁵, R⁶ und R⁷ die unter IV angegebenen Bedeutungen besitzen können. Die Monomere der Struktur VIII können gegebenenfalls auch als Gemisch eingesetzt werden.

Gemäß einer bevorzugten Ausführungsform werden noch bis zu 50 Mol-% insbesondere bis zu 20 Mol-%, bezogen auf die Monomere entsprechend der Formeln I bis IV bzw. V bis VIII andere polymerisierbare Monomere, z.B. Monomere auf Basis von N-Vinylverbindungen, Vinyl-oder Allylsulfonsäuren sowie gegebenenfalls substiuierte Acryl- bzw. Methacrylamide zum Aufbau der erfindungsgemäßen Copolymere verwendet. Beispiele für derartige Verbindungen sind N-Vinylpyrrolidon, Allylsulfonsäure, Methallylsulfonsäure, Vinylsulfonsäure, 2-Acrylamido-2-methylpropansulfonsäure usw.

Die Copolymere entsprechend der vorliegenden Erfindung können nach den üblichen Methoden hergestellt werden. Ein besonderer Vorteil besteht darin, daß man erfindungsgemäß ohne Lösemittel oder aber in wäßriger Lösung arbeiten kann. In beiden Fällen handelt es sich um drucklose und daher sicherheitstechnisch unbedenkliche Reaktionen.

Wird das Verfahren in wäßriger Lösung durchgeführt, so erfolgt die Polymerisation bei 20 bis 100°C mit Hilfe eines üblichen Radikalstarters, wobei die Konzentration der wäßrigen Lösung vorzugsweise auf 20 bis 50 Gew.-% eingestellt wird. Gemäß einer bevorzugten Ausführungsform kann die radikalische Polymerisation hierbei im sauren pH-Bereich durchgeführt werden, insbesondere bei einem pH-Wert zwischen 4,0 und 6,5, wobei auf die herkömmlichen Initiatoren wie H₂O₂ zurückgegriffen werden kann, ohne daß es zu einer befürchteten Etherabspaltung kommt, wodurch die Ausbeuten sehr stark beeinträchtigt würden.

Beim erfindungsgemäßen Verfahren wird vorzugsweise so gearbeitet, daß das ungesättigte Dicarbonsäure-Derivat vorgelegt wird und die übrigen Monomeren zusammen mit dem Polymerisationsinitiator zudosiert werden, sobald die erforderliche Reaktionstemperatur in der Vorlage erreicht ist.

Separat zugegeben werden die Polymerisations-Hilfsmittel, welche die Aktivierungsschwelle des vorzugsweise peroxidischen Initiators senken können, so daß die Copolymerisation bei relativ niedrigen Temperaturen ablaufen kann.

Werden die ungesättigten Dicarbonsäure-Derivate in Form der bevorzugten Polyalkylenglykolmonoester der allgemeinen Formel V eingesetzt, so ist es erfindungsgemäß auch möglich, diese zuerst in der Vorlage durch Umsetzung der ungesättigten Dicarbonsäure mit den Polyalkylenoxiden intermediär herzustellen. Ebenso ist es möglich, die zur Einführung der Baugruppe c) erforderlichen Dicarbonsäureimide oder/und -amide entsprechend der allgemeinen Formel IIIb bzw. VIIb gesondert intermediär herzustellen und diese dem ungesättigten Dicarbonsäure-Derivat ggf. zusammen mit den übrigen Monomeren zuzusetzen.

Die Art der verwendeten Polymerisationsinitiatoren, -aktivatoren und sonstige Hilfsmittel, wie z.B. Molekulargewichtsregler, ist relativ unproblematisch, d.h. als Initiatoren kommen die üblichen Radikalspender zum Einsatz, wie Wasserstoffperoxid, Natrium-, Kalium- oder Ammoniumperoxodisulfat, tert. Butylhydroperoxid, Dibenzoylperoxid, Lauroylperoxid, Dicylohexylperoxodicarbonat, tert. Butylperoxy-2-ethylhexanoat, tert. Butylperbenzoat, Natriumperoxid, 2,2'-Azobis-(2-amidinopropan)-dihydrochlorid, Azobis-(isobutyronitril), Azobis-(2-methylvaleronitril), Azobis-(cyclohexancarbonitril) usw. Kommen Redoxsysteme zum Einsatz, so werden oben genannte Initiatoren mit reduzierend wirkenden Aktivatoren kombiniert. Beispiele für derartige Reduktionsmittel sind Fe(II)-salze, Natriumhydroxymethansulfinat-Dihydrat, Alkalimetallsulfite und -metabisulfite, Natriumhypophosphit, Hydroxylaminhydrochlorid, Thioharnstoff usw.

Als Polymerisationsbeschleuniger oder Aktivatoren kommen Natriumbisulfit, Ascorbinsäure oder Schwermetallsalze und als Molekulargewichtsregler schwefelfreie Verbindungen wie Allylverbindungen, Aldehyde und phosphorhaltige Komponenten zum Einsatz.

Ein besonderer Vorteil der erfindungsgemäßen Copolymere ist die Tatsache, daß sie auch ohne Lösemittel hergestellt werden können, was mit Hilfe der üblichen radikalischen Starter bei Temperaturen zwischen 60 und 150°C erfolgen kann. Diese Variante kann aus wirtschaftlichen Gründen insbesondere dann angewendet werden, wenn die erfindungsgemäßen Copolymere in wasserfreier Form direkt ihrer erfindungsgemäßen Verwendung zugeführt werden sollen, weil dann eine aufwendige Abtrennung des Lösemittels, insbesondere des Wassers, beispielsweise durch Sprühtrocknung entfallen kann.

Gemäß einer bevorzugten Ausführungsform werden die erfindungsgemäßen Copolymere nach der Polymerisation mit Wasser verdünnt und durch Zugabe von Lauge neutralisiert.

Die erfindungsgemäßen Copolymere eigenen sich hervorragend als Zusatzmittel für wäßrige Suspensionen, insbesondere auf Basis von anorganischen Bindemitteln, wie z.B. Zement, Kalk, Gips, Halbhydrat und Anhydrit. Hierbei werden sie in einer Menge von 0,01 bis 10 Gew.-%, vorzugsweise 0,05 bis 3 Gew.-% bezogen auf das Gewicht des anorganischen Bindemittels, eingesetzt. Die Copolymere besitzen hierbei eine ausgezeichnete und langanhaltende verflüssigende Wirkung, ohne hohe Anteile von Luftporen in die entsprechende Bindemittelmischung einzuführen und ohne hierbei Einbußen bei der Festigkeit und Beständigkeit des erhärteten Baustoffs hinnehmen zu müssen. Besonders geeignet sind die erfindungsgemäßen Copolymere für Suspensionen mit geringem Wassergehalt, beispielsweise für Suspensionen mit einem Wassergehalt von 15 bis 45 Gew.-% bezogen auf den Anteil an anorganischem Bindemittel.

Die nachfolgenden Beispiele sollen die Erfindung näher erläutern.

### Beispiel 1

In einem 2 500 ml Doppelwandreaktionsgefäß mit Thermometer, Rührer, Rückflußkühler und zwei Eingängen für separate Zuläufe wurden 763,3 g (0,413 Mol) Methylpolyethylenglykol (MW 1 850 g/Mol) vorgelegt und mit 9,8 g (0,100 Mol) Maleinsäureanhydrid unter Rühren vermischt. Die eingeschlossene Luft wurde durch 30 minütiges Einleiten von Stickstoff entfernt und der Kolbeninhalt auf 105°C erwärmt.

In einem separaten heizbaren und rührbaren Zulaufgefäß (Zulauf 1) wurde gleichzeitig eine Mischung aus 763,3 g (0,413 Mol) Methylpolyethylenglykol (MW 1 850 g/Mol), 69,8 g (0,279 Mol) Methylpolyethylenglykol-Monoallylether (MW 250 g/Mol) und 38,1 g (0,165 Mol) Sulfanilsäure-Natriumsalzdihydrat bereitet, zu welcher bei einer Temperatur von 65°C 203,9 g (2,079 Mol)Maleinsäureanhydrid unter Rühren eingetragen wurden (Bildung der Monomerkomponente VIIb). Nach Spülung mit Stickstoff wurde diese Mischung sowie eine zweite Mischung bestehend aus 287,2 g (2,758 Mol) Styrol, 12,2 g Azobis-(isobutyronitril) und 2,5 g 1,1'Azobis(cyclohexancarbonitril) (Zulauf 2) kontinuierlich über einen Zeitraum von 60 Minuten in den Reaktor dosiert.

Nach Beendigung der Zugabe wurde das Reaktionsgemisch auf 115°C erwärmt und weitere 60 Minuten gerührt. Anschließend wurde die Reaktionstemperatur auf 140°C erhöht und 120 Minuten zur Vervollständigung der Veresterung und Imidbildung gerührt.

Die klare, orange gefärbte Polymerschmelze wurde unter weiterem Rühren auf 115°C abgekühlt, mit 63 g Diisobutylphthalat versetzt, weiter auf 50°C abgekühlt, mit 2 500 ml Wasser verdünnt und mit verdünnter Natronlauge auf einen pH-Wert von 6,5 gestellt.

Es wurde eine gelborange gefärbte, trübe Lösung erhalten, die einen Feststoffgehalt von 34,7 Gew.-% aufwies.

### Beispiel 2

Es wurde analog Beispiel 1 verfahren, jedoch mit folgender Zusammensetzung der Zuläufe 1 und 2:

### Zulauf 1:

- 763,3 g (0,413 Mol): Methylpolyethylenglykol (MW 1 850 g/Mol)
- 31,2 g (0,125 Mol): Methylpolyethylenglykol-Monoallylether (MW 250 g/Mol)
- 28,6 g (0,165 Mol): N-Phenylmaleinimid
- 212,0 g (2,162 Mol): Maleinsäureanhydrid

### Zulauf 2:

- 290,3 g (2,787 Mol): Styrol
- 12,2 g: Azobis-(isobutyronitril)
- 2,5 g: Azobis-(cyclohexancarbonitril)

Die rotbraun gefärbte Polymerschmelze wurde mit 63 g Diisobutylphthalat versetzt, verdünnt und neutralisiert.

Es wurde eine trübe, gelblich gefärbte Zubereitung mit einem Feststoffgehalt von 34,3 Gew.-% erhalten.

### Beispiel 3

Beispiel 1 wurde wiederholt, jedoch wurden 97,7 g (0,279 Mol) Methylpolyethylenglykol-Monovinylether (MW 350 g/Mol) statt des im Beispiel 1 verwendeten Allylethers (MW 250 g/Mol) eingesetzt. Darüber hinaus wurde der Vinylether im Gemisch mit Styrol im Zulauf 2 dosiert und nicht wie der Allylether im Beispiel 1 im Zulauf 1. Das dunkelbraune Polymer wurde in der Abkühlphase mit 64 g Diisobutylphthalat versetzt, mit Wasser verdünnt und mit NaOH neutralisiert.

Das trübe, bräunlich gefärbte Endprodukt enthielt 33,8 Gew.-% Feststoff.

### Beispiel 4

Es wurden 1 318,1 g (0,7125 Mol) Methylpolyethylenglykol (MW 1 850 g/Mol) und 118,8 g (0,2376 Mol) Methylpolyethylenglykol (MW 500 g/Mol) vorgelegt und mit 219,9 g (2,243 Mol) Maleinsäureanhydrid vermischt. Nach 30 minütiger Stickstoffspülung wurde der Kolbeninhalt auf 105°C erwärmt und aus einem separaten Zulauf eine Mischung aus
- 223,8 g (2,149 Mol): Styrol
- 179,1 g (0,716 Mol): Methylpolyethylenglykol-Monoallylether (MW 250 g/Mol)
- 13,1 g: Azobis-(isobutyronitril) und
- 2,7 g: Azobis-(cyclohexancarbonitril)
über einen Zeitraum von 2 Stunden zudosiert. Nach Beendigung der Zugabe wurde die Temperatur auf 115°C erhöht und weiter 60 Minuten bei dieser Temperatur zur Vervollständigung der Polymerisation gerührt.

Anschließend wurde eine Mischung aus 35,9 g (0,270 Mol) Di-(2-methoxyethyl)amin und 63,3 g Diisobutylphthalat über einen Zeitraum von 30 Minuten zugegeben und die Temperatur auf 140°C erhöht. Nach Erreichen dieser Temperatur wurde noch 2 Stunden zur Vervollständigung der Ester- und Monoamidbildung gerührt. Nach Abkühlen auf 50°C wurde mit Wasser verdünnt und mit verdünnter Natronlauge ein pH-Wert von 6,5 eingestellt.

Erhalten wurde eine bernsteinfarben gefärbte Emulsion mit 34,9 Gew.-% Feststoff.

### Beispiel 5

Beispiel 4 wurde wiederholt mit 160,2 g (0,237 Mol) eines einseitig methylveretherten Blockcopolymerisats aus Ethylenoxid und Propylenoxid (molarer Anteil 10:3, MW 675 g/Mol), welches anstelle des Methylpolyethylenglykol (MW 500 g/Mol) in Beispiel 4 eingesetzt wurde.

Erhalten wurde eine Emulsion mit 36,0 Gew.-% Feststoff.

### Beispiel 6

Es wurde verfahren wie in Beispiel 4 beschrieben, jedoch wurde die Styrolmenge auf 150,4 g (1,444 Mol) reduziert zugunsten von zusätzlich 78,4 g (0,705 Mol) N-Vinylpyrrolidon.

Das hellbraune Endprodukt wies 34,1 Gew.-% Feststoff auf.

### Beispiel 7

- 800 g (0,800 Mol): Methylpolyethylenglykol-Monovinylether (MW 1 000 g/Mol)
- 100 g (0,200 Mol): Methylpolyethylenglykol (MW 500 g/Mol) und
- 257,4 g (2,625 Mol): Maleinsäureanhydrid
wurden vorgelegt, mit Stickstoff gespült und auf 95°C erwärmt.

Anschließend wurde ein Mischung aus
- 26 g (0,250 Mol): Styrol
- 950 g (0,950 Mol): Methylpolyethylenglykol-Monovinylether (MW 1 000 g/Mol) und
- 21 g: Azobis-(2-methylbutyronitril)
über einen Zeitraum von 2 Stunden zudosiert. Das Reaktionsgemisch wurde noch 2 Stunden nach Zugabeende bei 95°C gerührt.

Anschließend wurden
- 56,4 g (0,423 Mol): Di-(2-methoxyethyl)amin und
- 65 g: Diisobutylphthalat
zugesetzt und die Temperatur auf 125°C erhöht. Es wurde noch 2 Stunden bei dieser Temperatur gerührt. Nach Abkühlung auf 50°C wurde verdünnt und neutralisiert.

Es verblieb eine hellbraune Zubereitung mit 39.9 Gew.-% Feststoff.

### Beispiel 8

Es wurde wie unter Beispiel 7 beschrieben verfahren, jedoch wurden 880 g (0,800 Mol) Methylpolyethylenglykol-Monoallylether (MW 1 100 g/Mol) anstelle des Vinylethers in der Vorlage und 1 045 g (0,950 Mol) Methylpolyethylenglykol-Monoallylether (MW 1 100 g/Mol) anstelle des Vinylethers im Zulauf eingesetzt. Die Initiatormenge mußte auf 43,5 g erhöht werden.

Erhalten wurde ein hellbraun gefärbtes Produkt mit 43,2 Gew.-% Feststoff.

### Beispiel 9

Nach dem im Beispiel 4 beschriebenen Verfahren wurde ein Polymer synthetisiert, wobei in der Nachreaktion statt Di-(2-methoxyethyl)amin Cyclohexylamin in einer Menge von 37,7 g (0,380 Mol) eingesetzt wurde.

Das rotbraun gefärbte Endprodukt enthielt 36,1 Gew.-% Feststoff.

### Beispiel 10

Statt Di-(2-methoxyethyl)amin im Beispiel 4 wurden 91,0 g (0,182 Mol) Methylpolyethylenglykol-Monoamin (MW 500 g/Mol) zur polymeranalogen Imidbildung verwendet.

Das hellorange wäßrige Endprodukt wies einen Feststoffgehalt von 35,0 Gew.-% auf.

### Vergleichsbeispiel 1

Handelsübliches Betonfließmittel "Melment L 10" auf Basis eines sulfonierten Melamin-Formaldehyd-Polykondensats.

### Vergleichsbeispiel 2

Kommerziell erhältliches Fließmittel "Liquiment N" auf Basis eines Naphthalinsulfonsäure-Formaldehyd-Polykondensats.

### Vergleichsbeispiel 3

Nach dem in der EP-A 306 449 beschriebenen Verfahren (Beispiel 1) wurde ein Copolymerisat aus Methylpolyethylenglykol-Monomaleinat und Styrol synthetisiert.

### Vergleichsbeispiel 4

Nach EP-A 610 699 (Beispiel 7) wurde ein Copolymer aus Methylpolyethylenglykol(MW 500 g/Mol), Maleinsäureanhydrid, das in einer polymeranalogen Reaktion teilweise mit Cyclohexylamin umgesetzt wurde, und Styrol hergestellt.

### Vergleichsbeispiel 5

Copolymer aus Maleinsäureanhydrid, Methylpolyethylenglykolmonovinylether (MW 500 g/Mol) und Polypropylenglykol-bis(maleinamidsäure) gemäß EP-A 736 553, Beispiel 1.

Die wäßrigen Copolymere-Zubereitungen wurden einer vergleichenden Prüfung als Fließmittel für zementhaltige Feststoffsuspensionen (Mörtel, Beton) unterzogen, um ihre gegenüber herkömmlichen Produkten verbesserten Eigenschaften nachzuweisen:

### Anwendungsbeispiel 1

450 g Portlandzement (CEM I 42,5 R, Mannersdorf) wurden mit 1 350 g Normensand (Grobanteil:Feinanteil = 2:1) und 225 g Wasser, welches die erfindungsgemäßen Produkte bzw. die Vergleichsprodukte in gelöster Form enthielt, normgerecht angerührt. Unmittelbar nach Herstellung der Zementmörtel erfolgte die Bestimmung des Ausbreitmaßes sowie dessen zeitliche Veränderung über einen Zeitraum von 90 Minuten. Darüber hinaus wurde der Luftgehalt in der Mischung zu Beginn der Messung ermittelt.

Die Ergebnisse dieser Prüfungen zeigt Tabelle 1.

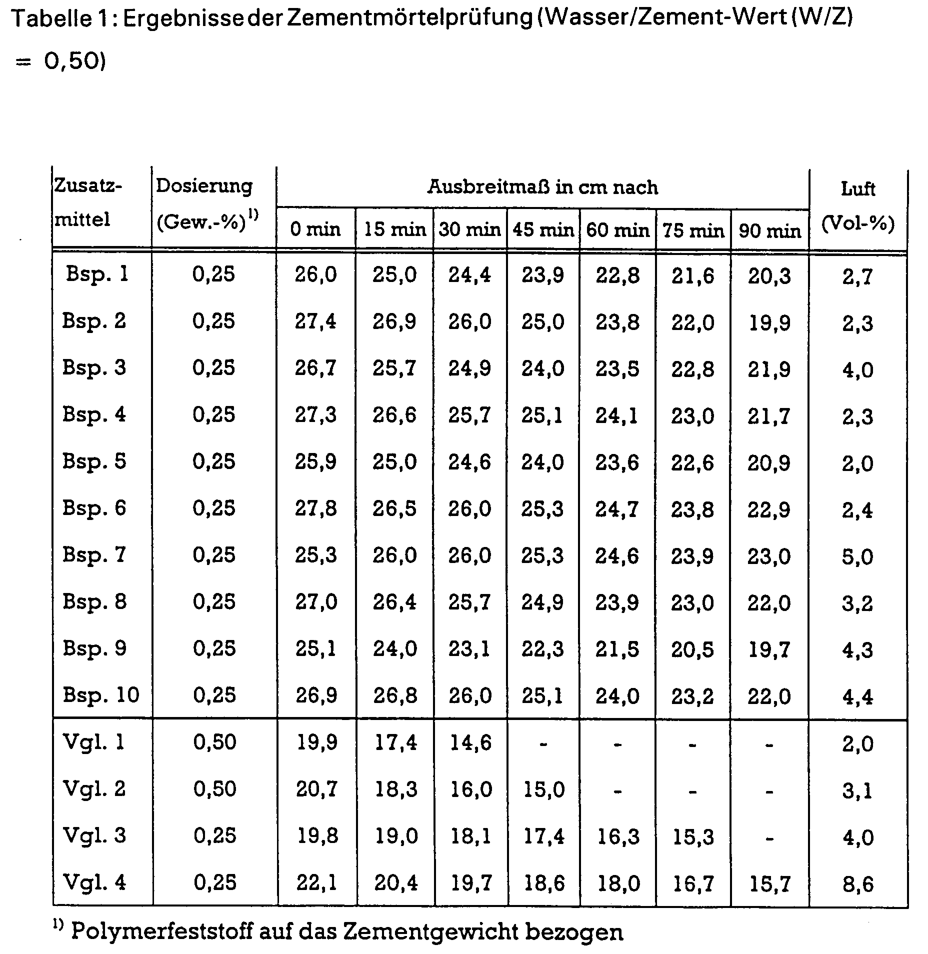

### Anwendungsbeispiel 2

Normgemäß wurden in einem Betonzwangsmischer 5,3 kg Portlandzement (CEM I 42,5 R, Kiefersfelden) mit 33,0 kg Zuschlägen (Sieblinie 0 bis 32 mm) und 2,65 kg Wasser (abzüglich des Wassers aus dem Zusatzmittel) vermischt. Die wäßrigen Lösungen der erfindungsgemäßen Copolymere bzw. der Vergleichsprodukte wurden zugesetzt und 10 bzw. 40 Minuten nach Zugabe des Fließmittels erfolgte die Bestimmung des Ausbreitmaßes nach DIN 1048 (Doppelbestimmung).

Im Anschluß an die Messung des 10 min-Ausbreitmaßes wurden die Frischbetone in Formen gefüllt, 10 sec verdichtet und 24 h bei 20°C gelagert. Von den erhaltenen Prüfkörpern (15 x 15 x 15 cm Kantenlänge) wurde die Druckfestigkeit sowie der Luftporenanteil über die Dichte dieser Prüfkörper ermittelt.

Die Ergebnisse sind in Tabelle 2 zusammengestellt.

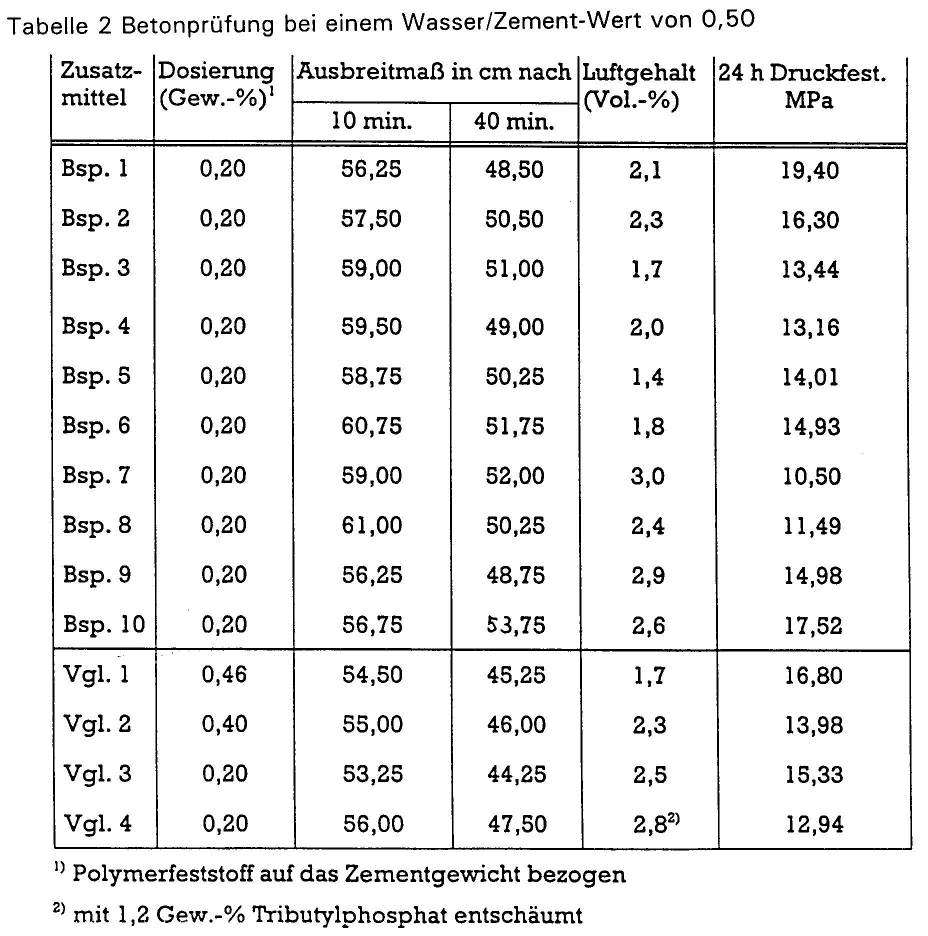

Neben den Betonprüfungen, die mit den erfindungsgemäßen Produkten und den Vergleichspolymeren bei einem Wasser/Zement-Wert von 0,50 durchgeführt wurden (Tabelle 2), wurden Tests bei einem deutlich reduzierten Wasseranteil (0,40) vorgenommen. Mit diesem niedrigen Wert können Hochleistungsbetone mit einem besonders dichten Gefüge hergestellt werden.

### Anwendungsbeispiel 3

Die Durchführung erfolgte wie im Anwendungsbeispiel 2 beschrieben, jedoch mit 2,12 kg Wasser statt 2,65 kg.

Die Ergebnisse sind in Tabelle 3 zusammengefaßt.

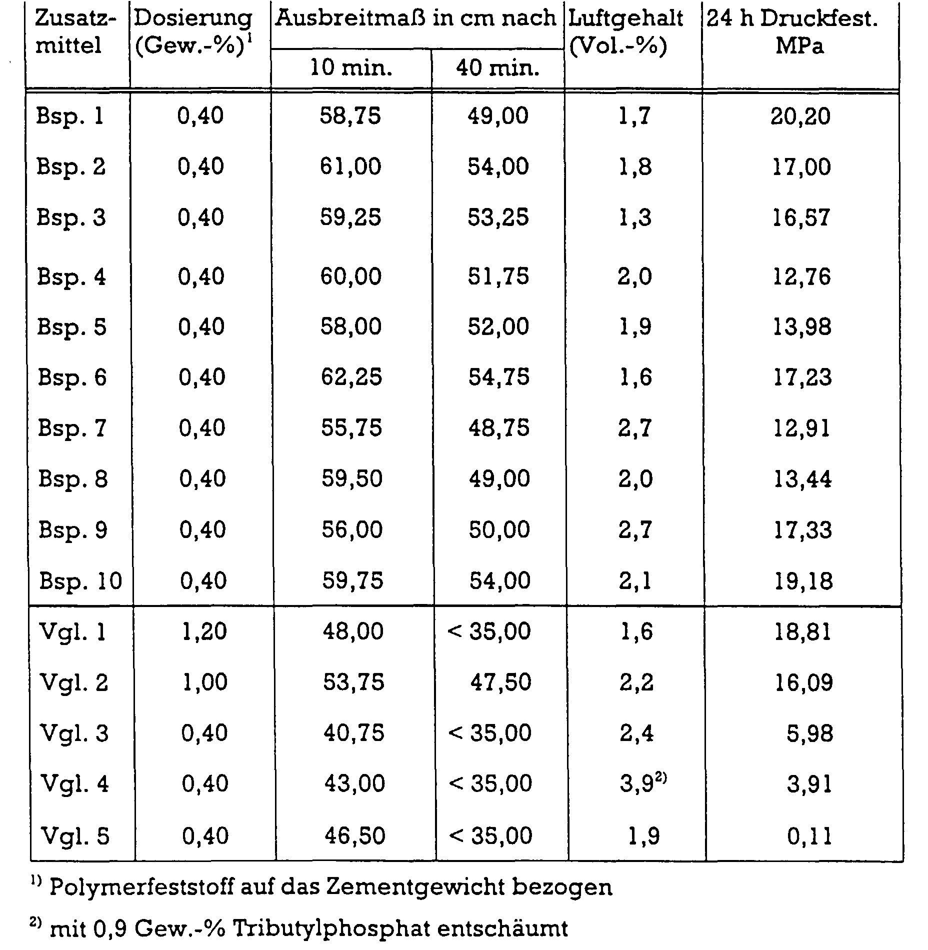

## Patentansprüche

1. Copolymere auf Basis von ungesättigten Dicarbonsäure-Derivaten und Oxyalkylenglykol-Alkenylethern enthaltend
(a) 1 bis 90 Mol-% Baugruppen der Formel Ia oder/und Ib 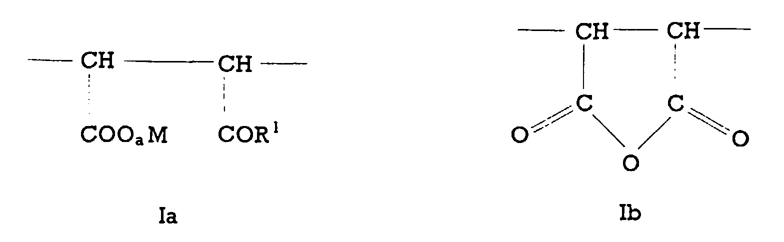
wobei M jeweils unabhängig Wasserstoff, ein ein- oder zweiwertiges Metallkation, ein Ammoniumion oder ein organischer Aminrest ist,
a = 1/2 oder 1 ist,
R¹ jeweils unabhängig -OₐM oder -O-(CₘH₂ₘO)ₙ-R² ist, wobei R² Wasserstoff, ein aliphatischer Kohlenwasserstoffrest mit 1 bis 20 C-Atomen, ein cycloaliphatischer Kohlenwasserstoffrest mit 5 bis 8 C-Atomen oder ein gegebenenfalls substituierter Arylrest mit 6 bis 14 C-Atomen ist, m 2 bis 4 ist und n 1 bis 200 ist,
(b) 0,5 bis 80 Mol-% Baugruppen der Formel II 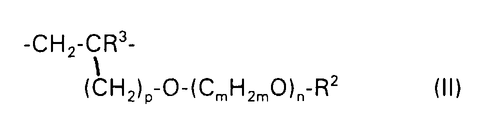
wobei R³ jeweils unabhängig Wasserstoff oder ein aliphatischer Kohlenwasserstoffrest mit 1 bis 5 C-Atomen ist,
p 0 bis 3 ist und
R², m, n die oben genannten Bedeutungen besitzen,
(c) 0,5 bis 80 Mol-% Baugruppen der Formel IIIa oder/und IIIb 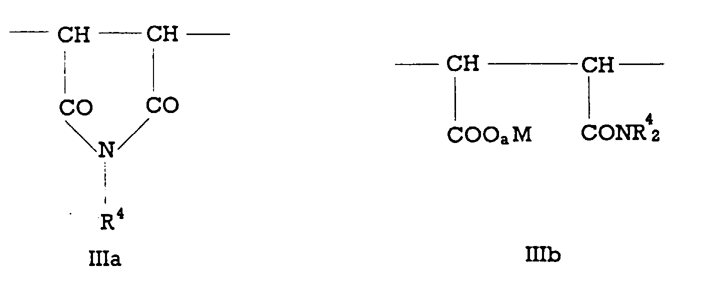
worin R⁴ jeweils unabhängig Wasserstoff, ein gegebenenfalls mit Hydroxylgruppen substituierter aliphatischer Kohlenwasserstoffrest mit 1 bis 20 C-Atomen, ein cycloaliphatischer Kohlenwasserstoffrest mit 5 bis 8 C-Atomen, ein gegebenenfalls mit -COOₐM,-(SO₃)ₐM oder/und -(PO₃)ₐM₂-Gruppen substituierter Arylrest mit 6 bis 14 C-Atomen, -(CₘH₂ₘO)ₙ-R² oder -CO-NH-R¹ ist und M, a, R², m und n die oben genannten Bedeutungen besitzen sowie
(d) 1,0 bis 90 Mol-% Baugruppen der Formel IV 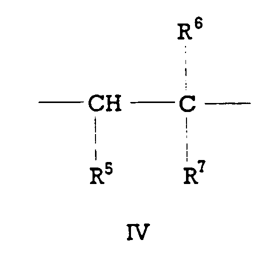
worin R⁵ jeweils unabhängig Wasserstoff, eine Methyl- oder eine gegebenenfalls substituierte Methylengruppe, die unter Einbeziehung von R⁷ einen oder mehrere 5- bis 8-gliedrige Ringe bildet, ist, R⁶ jeweils unabhängig Wasserstoff, eine Methyl- oder eine Ethylgruppe ist sowie R⁷ jeweils unabhängig Wasserstoff, ein aliphatischer Kohlenwasserstoffrest mit 1 bis 20 C-Atomen, ein cycloaliphatischer Rest mit 5 bis 8 C-Atomen, ein gegebenenfalls substitutierter Arylrest mit 6 bis 14 C-Atomen, -OCOR⁴, -OR⁴ oder -COOR⁴ ist und R⁴ die oben genannte Bedeutung besitzt.

2. Copolymere nach Anspruch 1,
**dadurch gekennzeichnet,**
daß sie 30 bis 60 Mol-% Baugruppen der Formel Ia oder/und Ib, 10 bis 40 Mol-% Baugruppen der Formel II, 3 bis 30 Mol-% Baugruppen der Formel IIIa oder/und IIIb sowie 10 bis 60 Mol-% Baugruppen der Formel IV enthalten.

3. Copolymere nach einem der Ansprüche 1 oder 2,
**dadurch gekennzeichnet,**
daß das molare Verhältnis der Struktureinheiten (I + III) zu (II + IV) bei ungefähr 1:1 liegt.

4. Copolymere nach einem der Ansprüche 1 bis 3,
**dadurch gekennzeichnet,**
daß M ein ein- oder zweiwertiges Metallkation ausgewählt aus der Gruppe bestehend aus Natrium-, Kalium-, Calcium- oder Magnesiumionen bedeutet.

5. Copolymere nach einem der Ansprüche 1 bis 4,
**dadurch gekennzeichnet,**
daß R² ein Phenylrest ist, der durch Hydroxyl-, Carboxy- oder/und Sulfonsäure-Gruppen substituiert ist.

6. Copolymere nach einem der Ansprüche 1 bis 5,
**dadurch gekennzeichnet,**
daß in der Formel II p 0 oder 1 bedeutet und m 2 oder/und 3 bedeutet.

7. Copolymere nach einem der Ansprüche 1 bis 6,
**dadurch gekennzeichnet,**
daß sie bis zu 50 Mol-%, insbesondere bis zu 20 Mol-%, bezogen auf die Summe der Baugruppen der Formeln I, II, III und IV zusätzliche Baugruppen enthalten, deren Monomere N-Vinylverbindungen, Vinyl- oder Allylsulfonsäuren sowie gegebenenfalls substituierte Acryl- bzw. Methacrylamide darstellen.

8. Copolymere nach einem der Ansprüche 1 bis 7,
**dadurch gekennzeichnet,**
daß sie ein mittleres Molekulargewicht von 1 000 bis 200 000 aufweisen.

9. Verfahren zur Herstellung der Copolymere nach einem der Ansprüche 1 bis 8,
**dadurch gekennzeichnet,**
daß man 1 bis 90 Mol-% eines ungesättigten Dicarbonsäure-Derivats, 0,5 bis 80 Mol-% eines Oxyalkylenglykol-Alkenylethers, 0,5 bis 80 Mol-% eines ungesättigten Dicarbonsäureimids oder/und -amids und 1,0 bis 90 Mol-% eines vinylischen Monomers mit Hilfe eines radikalischen Starters polymerisiert.

10. Verfahren nach Anspruch 9,
**dadurch gekennzeichnet,**
daß man 30 bis 60 Mol-% eines ungesättigten Dicarbonsäure-Derivats, 10 bis 40 Mol-% eines Oxylalkylenglykol-Alkenylethers, 3 bis 30 Mol-% eines ungesättigten Dicarbonsäureimids oder/und - amids und 10 bis 60 Mol-% eines vinylischen Monomers einsetzt.

11. Verfahren nach einem der Ansprüche 9 bis 10,
**dadurch gekennzeichnet,**
daß man noch zusätzlich bis zu 50 Mol-%, insbesondere bis zu 20 Mol-%, bezogen auf die Monomeren mit den Baugruppen gemäß den Formeln I, II, III und IV einer N-Vinylverbindung, einer Vinyl- oder Allylsulfonsäure oder eines Acryl- oder Methacrylamids copolymerisiert.

12. Verfahren nach einem der Ansprüche 9 bis 11,
**dadurch gekennzeichnet,**
daß man die Polymerisation in wäßriger Lösung bei einer Temperatur von 20 bis 100°C durchführt.

13. Verfahren nach Anspruch 12,
**dadurch gekennzeichnet,**
daß die Konzentration der Monomere in der wäßrigen Lösung 20 bis 50 Gew.-% beträgt.

14. Verfahren nach einem der Ansprüche 9 bis 13,
**dadurch gekennzeichnet,**
daß man die Polymerisation ohne Lösemittel mit Hilfe eines radikalischen Starters bei Temperaturen von 20 bis 150°C durchführt.

15. Verwendung der Copolymere nach einem der Ansprüche 1 bis 8 als Zusatzmittel für wäßrige Suspensionen auf Basis von anorganischen Bindemitteln, insbesondere Zement, Kalk, Gips, Halbhydrat und Anhydrit.

16. Verwendung nach Anspruch 15,
**dadurch gekennzeichnet,**
daß die Copolymere in einer Menge von 0,01 bis 10 Gew.-% vorzugsweise 0,1 bis 5 Gew.-% bezogen auf das Gewicht des anorganischen Bindemittels eingesetzt werden.

17. Verwendung nach Anspruch 15 oder 16 für Suspensionen mit geringem Wassergehalt von 14 bis 45 Gew.-% bezogen auf den Bindemittelgehalt.
